# EUROPEAN PATENT APPLICATION

(11) **EP 0 664 475 A1**
(43) Date of publication of application: **26.07.1995**
(21) Application number: 94302501.5
(22) Date of filing: 08.04.1994
(51) Int. Cl.: G03B 7/00

(54) **Camera with adjusting function and adjusting system of the same**

(30) Priority: 24.01.1994 JP 23349/94
(71) Applicant: PACIFIC CORPORATION, Tokyo (JP)
(72) Inventor: Irie, Kimiyasu, c/o Pacific Corporation, Tokyo (JP)
(74) Representative: Robson, Aidan John

(57) **Abstract**

A camera and an adjusting system thereof includes a camera section (1) mounted on a substrate (10), a microcomputer section (2), and a host computer (4) connected via an interface to the microcomputer section. Data necessary to adjust the camera section is supplied as a digital signal from the host computer (4) to the microcomputer section (2), thereby adjusting the camera section according to an adjusting procedure before hand stored in the microcomputer section. The adjusting process is simplified and hence various kinds of cameras can be easily produced according to usages and utilization purposes of the users. When an optional substrate (12) is attached to the substrate, the adjustment can be conducted by inputting adjustment data from an operator's switch section (5) of the optional substrate.

## Description

### BACKGROUND OF THE INVENTION

The present invention relates to a camera applicable to a monitor camera system, a door-phone, or the like, and an adjusting system of the camera, and in particular, to a camera adjustable according to specifications of a manufacturer or usage purposes of users thereof and to an adjusting system of the camera.

### Description of the Prior Art

Recently, a CCD camera employing a charged-coupled device (CCD) has been put to use in a monitor camera, a door-phone, an image input facility, and the like. However, since the usage purpose of the CCD camera varies between the users, the necessary setting ranges respectively of the exposure, shutter speed, and the like also alter therebetween. To cope with such requirements, if the cameras are to be produced for the respective utilization purposes, it will be required to produce cameras of a large number of types, which complicates the manufacturing process and soars the fabrication cost. To overcome such disadvantages, it is required to manufacture a CCD camera applicable to general purposes so as to cope with various usage purposes such that adjustments of cameras are accomplished according to the usages thereof. That is, it is necessary to adjust the setting ranges of the iris and shutter speed, and the color temperature, which can be selected by the user, in consideration of such factors as whether the camera is primarily operated in the daytime or night time, a degree of resolution of an image shot by the camera, and reproduction of a tone of color required.

Heretofore, in the camera adjusting operations above, an analog-type control of a camera disposed for each of the pertinent circuits thereof is slid so as to sense a continuous change in an output signal in response to the change thus caused in the resistance value. When an appropriate sense signal is attained as a result, the resistance value of the control is fixed, thereby conducting the adjusting operation. In addition, there are provided external adjusting switches for the camera so that the user additionally carries out simple adjustments of the camera later.

However, the conventional cameras above have been attended with the following problems. First, for each of the adjustments of the setting ranges respectively of the shutter speed, the iris, and the color temperature, there is adopted an analog control so as to sense a consecutive change in each output signal, thereby obtaining an appropriate output signal. Due to a great number of items to be adjusted, a considerably long period of time is necessitated for the adjustments thereof. Consequently, when it is desired to adjust cameras according to usages and utilization purposes of the respective users, the conventional technology is attended with a problem of the complicated adjusting process. Moreover, to use the CCD camera in a monitoring camera facility, a door-phone, or the like, it has been desired to reduce the size of the camera. However, according to the conventional technology, for the adjustments of the CCD camera, there are required adjusting switches and analog-type controls externally attached onto the body of the camera. This leads to a problem that the reduction of the camera size is limited.

### SUMMARY OF THE INVENTION

A preferred embodiment of the present invention provides a camera having an adjusting function and an adjusting system of the, camera which facilitates the manufacturer of the camera to adjust the camera according to a camera utilization desired by the user so as to easily configure various kinds of camera, thereby solving the above problems.

An embodiment of the present invention provides a camera with an adjusting function including a semiconductor substrate adjustment control means mounted on the semiconductor substrate for storing therein a procedure of a predetermined function adjustment of the camera, and an input terminal disposed on the semiconductor substrate. In the apparatus, the input terminal receives as input data an adjusting signal sent from a host computer connected via an interface to the input terminal, thereby accomplishing the function adjustment by the adjustment control means.

Moreover, a preferred embodiment of the present invention, provides a camera adjusting system including a camera having a semiconductor substrate and an input terminal disposed on the semiconductor substrate and a host computer connected via an interface to the input terminal. In the camera, there is disposed adjustment control means mounted on the semiconductor substrate for storing therein a procedure of a predetermined function adjustment of the camera. In the system, the input terminal receives as input data an adjusting signal digitized by and sent from a host computer so as to effect the function adjustment by the adjustment control means.

In a further embodiment of the present invention, data necessary for the camera adjustment is delivered as a digital signal from an optional substrate connected to the host computer or camera. In response thereto, the adjustment control means mounted on the semiconductor substrate carries out the predetermined function adjustment of the camera according to the procedure stored in the adjustment control means in advance.

### BRIEF DESCRIPTION OF THE DRAWINGS

Preferred embodiments of the present invention will now be described in detail, by way of example, with reference to the accompanying drawings in which:
Fig. 1 is a schematic block diagram showing an embodiment of the camera adjusting system embodying the present invention;
Fig. 2 is a diagram showing an example of the layout of the operator's switch section of Fig. 1;
Fig. 3 is a flowchart showing the function adjusting operation of the system of Fig. 1;
Fig. 4 is a diagram showing an example of the screen presented on th display section of Fig. 1; and
Fig. 5 is an illustrative diagram showing relationships between setting items and submenus thereof.

### DESCRIPTION OF THE PREFERRED EMBODIMENTS

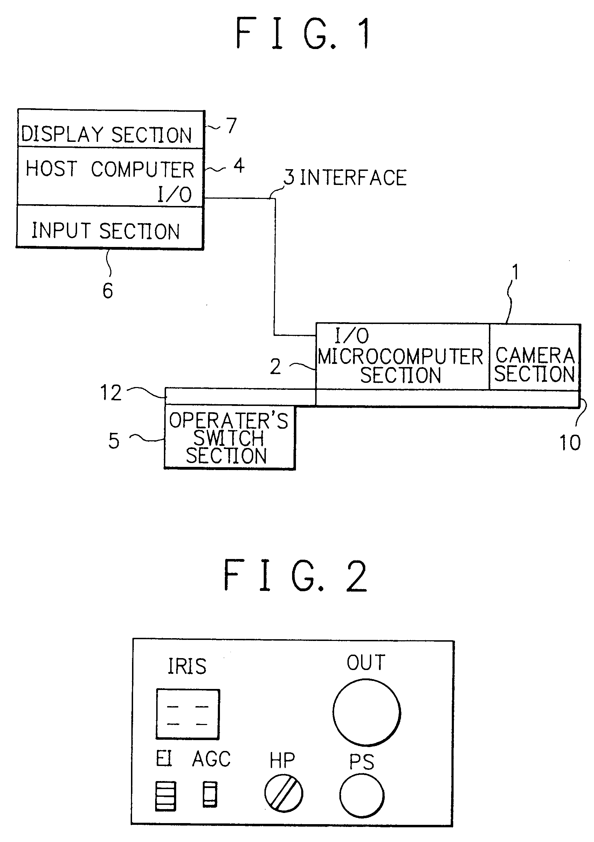

Referring now to the accompanying drawings, description will be given in detail of an embodiments of a camera and a camera adjusting system embodying the present invention. Fig. 1 shows in a block diagram an outline of an embodiment of the camera adjusting system.
As shown in this configuration, there are included a camera section 1 fabricated as a modular unit in which a camera utilizing a change-coupled device (CCD) as an imaging element is mounted on a substrate 10, a microcomputer section 2 in which a microcomputer is arranged on the substrate 10, and a host computer 4 is linked via an interface 3 to the microcomputer section 2.

The camera section 1 includes such constituent elements disposed on the substrate 10 as a lens for focusing a light from an object to be shot, an electronic iris for adjusting the quantity of light from the object, and a CCD for accumulating therein as an electric charge the light passed through the lens and for transforming the electric charge into an electric signal. The microcomputer section 2 connected to the camera section 1 may be configured as an attachable and detachable unit. The microcomputer includes a plurality of integrated circuit chips formed on the substrate 10. The microcomputer section 2 is coupled with the host computer 4 via the interface 3 connected to an input terminal I/O.

In addition, it is possible to connect an optional substrate 12 to the substrate 10. Disposed on the optional substrate 12 is an operator's switch section 5. In response to an input signal supplied from the switch section 5, there is accomplished a camera adjusting function in the camera section 1.

The host computer 4 has an input section 6 including, for example, a keyboard and a mouse and an output section 7 including, for example, a display. When powered, the host computer 4 reads in a program necessary for a camera adjustment and then sends in the form of digital signals the data received from the input section 6 to the microcomputer section 1 via the interface 3. In the microcomputer section 1, there has been beforehand stored programs implementing various procedures necessary for adjustments of the camera section 1. In response to a signal transmitted from the host computer 4, the microcomputer section 1 accomplishes various function adjustments of the camera section 1.

Fig. 2 illustratively shows an example of the switch layout in the operator's switch section 5. As can be seen from the diagram, the switch section 5 selectively attachable to the substrate 10 by use of the optional substrate 12 includes switches to adjust, for example, the electric iris (IRIS) and the automatic gain control (AGC) controlling a period of time in which the electric charge is stored in the CCD of the camera. The camera section 1 may be adjusted through a change-over operation of a switch in the operator's switch section 5.

For example, conducting a change-over of the IRIS switch in the left-hand side of Fig. 2, the electric iris can be selectively set to the on, off, or locked state. A switch next to the IRIS switch is disposed to adjust the automatic gain control (AGC). Namely, when it is desired to turn the AGC switch off, the operator sets the AGC switch to a position indicated as OFF. In response to the setting operation, a digital signal to turn the automatic gain contol off is delivered from the microcomputer section 2 to the camera section 1 so as to control the period of time for accumulation of electric charge in the charge-coupled device. As above, the camera adjustments are carried out not only in response to signals produced from the host computer 4, namely, essential adjustments of the camera can also be conducted by the user from the operator's switch section 5.

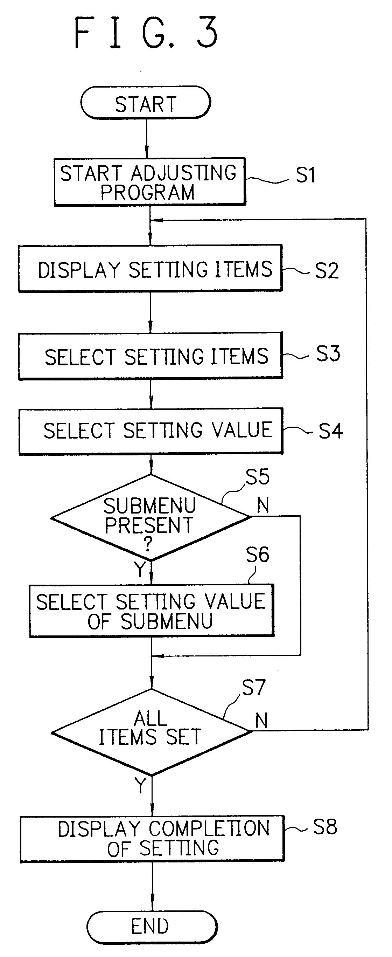

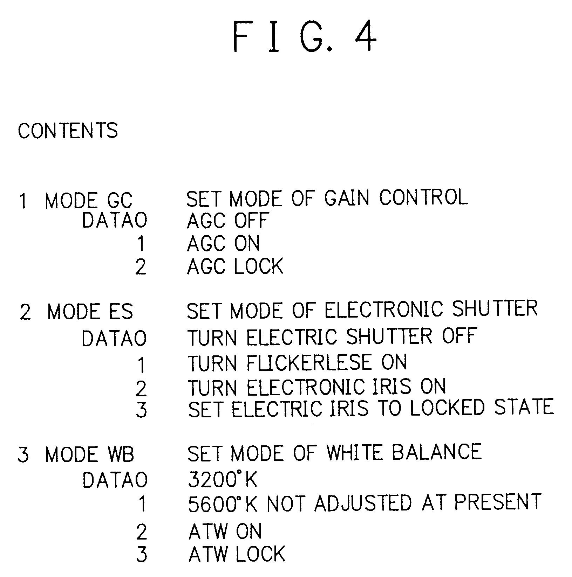

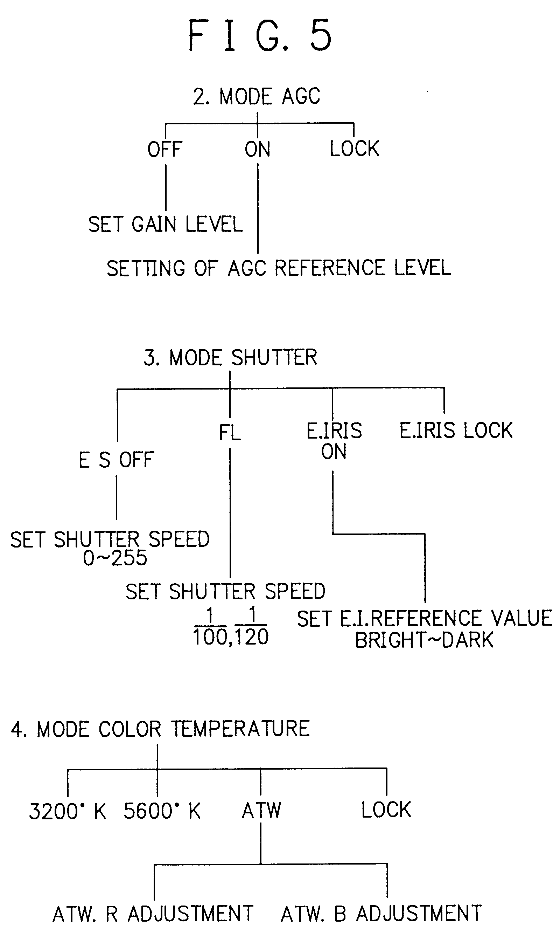

Next, the operation to adjust the camera configured as above will be described by reference to the drawings. Fig. 3 is a flowchart showing the camera adjusting operation, Fig. 4 shows an example of the screen image presented on the display section 7 of the host computer 4, and Fig. 5 is a diagram showing relationships between setting items and subordinate setting items in submenus displayed on the screen in response to selection of the setting items.

First, in a case where the camera 1 is desired to be adjusted from the host computer 4, when the camera section 1 and the host computer 4 are powered. Responsively, as shown in a step S1, the host computer 4 responsively reads in, as shown in a step S1, a program required for the adjustment and then initiates execution of the program. Thereafter, on the display section 7 of the host computer 4, there are displayed adjustment setting items for various positions of the camera (step 2). In a subsequent step S3, when the user moves the cursor via the keyboard of the input section 6 to select a setting item, there is presented, for example, a screen image shown in Fig. 4. The user accordingly moves the cursor to select a necessary setting item (step 4).

For example, the gain control mode is selected from the modes for the gain control. Namely, when the user chooses a value "0", "1", or "2" by the cursor, the automatic gain control is turned off, is turned on, or is locked to a value specified by the user, respectively.

The ES items are displayed to set an electric shutter mode. When the user selects a value "0" or "1", the electronic shutter is turned off or the flicker-less function is turned on, respectively. The flicker-less item is used to compensate or to correct an influence of flickering of a fluorescent lamp or the like upon an image shot by the camera. When the user selects a value "2" or "3", the electronic iris is turned on or is locked to a value designated by the user.

In addition, the WB items are presented to set the white balance mode. The white balance items are disposed to stipulate ratios of lights having wavelengths respectively of three primary colors for presentation of white. Namely, when the value "0" or "1" is selected, the color temperature is set to 3200° K or 5600° K, respectively. Moreover, when the value "2" or "3" is selected, the white balance is set to on or is locked to a color temparature denoted by the user. Thanks to the white balance function described above, there can be achieved a high-fidelity color reproduction regardless of the color temperature of the light source.

In addition to the setting items above, there are disposed, for example, such 21 items in total as the sharpness influencing the horizontal resolution and the ranges (upper-limit and lower-limit values) of red and blue for the white balance.

When a setting value is selected for a setting items in the step S4, a check is made to determine whether or not there exists a submenu for detailed setting items. For example, in the selection of the AGC mode shown in Fig. 5, when it is specified to turn the automatic gain control off, the system presents on the display section 7 an item for the user to set a gain level. The input section 6 then enters a state awaiting an input data.

Moreover, in the shutter mode setting operation, when the user specifies the electronic shutter to be turned off, there is displayed a submenu of the display section 7 for the user to designate a shutter speed. The host computer 4 is then set to an input wait state. The shutter speed can be selected in a range from 1/50 second to 1/300, 000 second. Integers 0 to 255 are assigned to the available speed values, respectively. Ordinarily, the value "0" corresponds to 1/50 second. In this connection, the range of the shutter speed is set and/or altered according to the EI setting items, not shown.

Moreover, in a similar fashion, when the "flicker-less" item is specified in the shutter mode selection, there are displayed shutter speed items related to the flicker-less operation. Since the flickering of the fluorescent lamp or the like varies between the 50-hertz and 60-hertz light sources, the shutter speed can be set to 1/100 or 1/120 second. The shutter speed "1/100 second" is set in advance in the usual case.

Furthermore, when the selection is made to turn the electric iris on, there is displayed a submenu including items to set reference values of the electric iris. The setting items are used to determine whether the reference value of the electric iris is set to a brighter or darker level. Additionally, in the operation to set the color temperature mode when the automatic white balance is chosen, there are displayed submenu items to adjust the red and blue values for the automatic white balance. In either cases, the host computer 4 enters the input wait state. According to the selected items above, the wavelength values respectively of red and blue are adjusted to resultantly establish the white balance.

When the necessary setting items are thus set, it is examined in a step S7 whether or not all items are completely designated. If there exists any missing item (NO in the step S7), control is returned to the step S2 so as to set the pertinent item. If the setting operation has been completely finished (YES in the step S7), the system displays a message to notify the termination of the setting operation (step S8) and thereby terminates the adjusting operation.

The values set by the host computer 4 as above are delivered as an iris control signal, a shutter speed control signal, etc. via the I/O port of the host computer 4 and the interface 3 to the I/O port of the microcomputer section 2. The microcomputer section 2 is beforehand loaded with camera adjusting programs. The iris control signal and the shutter speed control signal are respectively fed to the iris control circuit and the shutter speed control circuit for adjustments thereof under control of a central processing unit (CPU) of the microcomputer section 2.

In addition, after the adjustments are completely achieved by the host computer 4 as above, when the user particularly desires to conduct another adjustment or readjustments, the optional substrate 12 is connected to the substrate 10. The user inputs setting values from the operator's switch section 5 arranged on the optional substrate 12 so as to accomplish adjustments or re-adjustments. In other words, using the switches like those shown in Fig. 2, there are conducted the necessary adjustments. For example, the electronic shutter is set (the electric iris and the flicker-less setting items are selected), the automatic gain control is turned on or off, and the horizontal phase and the white balance are adjusted.

In the embodiment, data necessary to adjust the camera section 1 is supplied as digital signals from the host computer 4 to the camera section 1. In consequence, the process of adjusting the camera is simplified, which leads to an advantageous effect that various kinds of cameras can be easily produced according to the usages and utilization purposes of the users. Furthermore, when the optional substrate 12 is linked to the camera section 1, there can be achieved supplementary adjustments of the camera section 1. Also in this case, the adjusting operation is facilitated and hence there is obtained an advantage that the processing power of the host computer 4 is saved.

Incidentally, to adjust the camera section 1 in the embodiment, a data signal is delivered from the host computer 4 to be fed via the interface 3 to the camera section 1. However, the present invention is not restricted by the embodiment. Namely, for the adjustment, there may be employed data transmitted via a telephone line.

In the camera and the camera adjusting system in accordance with the present invention, the camera adjusting process is simplified and hence many kinds of cameras can be easily manufactured according to uses and usage purposes of the camera users. Moreover external switches and analog-type controls become unnecessary for the camera adjustments and the camera size can be further minimized, which advantageously leads to an effect that the power consumption of the camera is accordingly lowered as compared with those of the conventional technology.

While the present invention has been described with reference to the particular illustrative embodiments, it is not to be restricted by those embodiments but only by the appended claims. It is to be appreciated that those skilled in the art can change or modify the embodiments without departing from the scope and spirit of the present invention.

## Claims

1. A camera with an adjusting function, comprising:
A semiconductor substrate (10);
adjustment control means (2) mounted on the semiconductor substrate for storing therein a procedure of a predetermined function adjustment of the camera; and
an input terminal disposed on the semiconductor substrate, wherein:
the input terminal receives as input data an adjusting signal sent from a host computer (4) connected via an interface (3) to the input terminal, thereby accomplishing the function adjustment by the adjustment control means.

2. A camera adjusting system, comprising:
a camera (1) having a semiconductor substrate (10) and an input terminal disposed on the semiconductor substrate; and
a host computer (4) connected via an interface (3) to the input terminal of the camera, wherein:
the camera includes adjustment control means (2) mounted on the semiconductor substrate for storing therein a procedure of a predetermined function adjustment of the camera; and
the input terminal receives as input data an adjusting signal digitized by and sent from the host computer (4), thereby effecting the function adjustment by the adjustment control means.

3. A camera as claimed in claim 1, further including an optional substrate (12) connectible to the semiconductor substrate, the optional substrate including operation means (5), wherein
the function adjustment is achieved according to adjustment data supplied from the operation means.
